# EUROPÄISCHE PATENTSCHRIFT

(11) **EP 2 545 347 B1**
(45) Veröffentlichungstag und Bekanntmachung des Hinweises auf die Patenterteilung: **05.07.2017**
(21) Anmeldenummer: 11707834.5
(22) Anmeldetag: 07.03.2011
(51) Int. Cl.: G01G 21/10, G01G 23/01, G01G 19/02, A47B 88/427

(54) **ANORDNUNG ZUM MESSEN DER ACHSDRÜCKE VON TRANSPORTFAHRZEUGEN**
ARRANGEMENT FOR MEASURING THE AXLE PRESSURES OF TRANSPORT VEHICLES
DISPOSITIF DE MESURE DES CHARGES PAR ESSIEU DE VÉHICULES DE TRANSPORT

(30) Priorität: 09.03.2010 AT 14510 U
(43) Veröffentlichungstag der Anmeldung: 16.01.2013
(73) Patentinhaber: Hottinger Baldwin Messtechnik GmbH, 1230 Wien (AT); Batsch Waagen & EDV GmbH & Co KG, 3082 Loosdorf (AT)
(72) Erfinder: BATSCH, Hans-Heinz, A-3082 Loosdorf (AT); WEILINGER, Walter, A-1060 Wien (AT)
(74) Vertreter: Puchberger & Partner Patentanwälte
(86) Internationale Anmeldenummer: PCT/EP2011/053388
(87) Internationale Veröffentlichungsnummer: WO 2011/110524

(56) Entgegenhaltungen:
- EP-A1- 0 097 734
- EP-A1- 0 369 894
- DE-A1- 19 925 891
- DE-C1- 10 115 490
- US-A- 4 832 140
- US-A1- 2009 151 421
- US-B1- 6 459 050

## Beschreibung

Die Erfindung bezieht sich auf eine Anordnung zum Messen der Achsdrücke von Transportfahrzeugen, wie Lastkraftwagen u.dgl., bei welcher in einer Ausnehmung des Fahrweges Kraftmessmodule zur dynamischen Achsdruckmessung vorgesehen sind und zur Erfassung von dynamischen Belastungen einer Fahrbahn durch Straßenfahrzeuge in der Fahrbahn eine Serie von dynamischen Kraftmessmodulen voneinander beabstandet eingelassen sind.

Anordnungen zur dynamischen Messung der Achsdrücke sind bereits bekannt und haben den Nachteil, dass die so erhaltenen Messungen nicht mit einer eichfähigen Genauigkeit vorgenommen werden können.

Herkömmliche Anordnungen sind beispielsweise aus der KR 20090130718, der WO 2009/049341, der EP 0 654 651 A1, der US 2009/0151421 A1, der US 6,459,050 B1, der DE 199 25 891 A1, der DE 101 15 490 C1, der US 4,832,140 A, der EP 0 097 734 A1 und der EP 0 369 894 A1 bekannt.

Eine für eine Autobahn vorgesehene Ausbildung ist z.B. der koreanischen Veröffentlichung KR20090130718 zu entnehmen, bei welcher in einer Ausnehmung der Fahrbahn Formkörper eingesetzt sind, von welchen eine Gruppe der Formkörper über Abstützungen auf einen dynamischen Sensor wirken und die andere Gruppe als Distanzstücke zwischen die Formkörper der ersten Gruppe eingesetzt sind. Eine solche Ausbildung ist nur für eine informative Messung geeignet.

Bei einer in der WO2009/049341 offenbarten weiteren bekannten Ausbildung sind innerhalb einer Messanordnung einzelne Kraftmessmodule in die Fahrbahn eingelassen, wobei diese Kraftmessmodule die einzelnen Daten an eine Datenverarbeitungsanlage liefern,
über welche dann die Auswertung vorgenommen werden kann. Auch diese Ausbildung liefert keine geeichten Messwerte.

Aus EP 0654654 A1 ist es bekannt, innerhalb einer Fahrbahn eine Mehrzahl von Kraftmessmodulen parallel zueinander einzulassen und mit diesen dynamischen Kraftmessmodulen die durch die Fahrzeugräder aufgebrachten Belastungen zu messen. Dazu sind in vorgegebenen Abständen Nuten bzw. Ausnehmungen quer zur Fahrbahnlängsrichtung angefertigt, in welche dann die einzelnen Messmodule eingesetzt sind. Diese Messmodule sind im Querschnitt ähnlich einem I-Träger ausgebildet, wobei der zentrale Steg aufgetrennt ist und zwischen den beiden Teilen die Druckmesssensoren angebracht sind. Im Bereich der Auftrennung sind seitlich Rohrteile vorgesehen, welche im Querschnitt halbkreisförmig sind und mit ihren Kanten die beiden verbliebenen Stegteile, die Druckmessteile überbrückend, verbinden.

Aus der US 2009/151421 A1 ist eine Anordnung zum Messen der Achsdrücke von Transportfahrzeugen bekannt, bei welcher in einer Ausnehmung des Fahrweges bzw. an den Schienen Kraftmessmodule zur dynamischen Achsdruckmessung vorgesehen sind. Nachteilig an dieser Anordnung ist es, dass weder die dynamischen Kraftmessmodule, noch die Kraftmessmodule, welche für die statische geeichte Messung der Achsdrücke verwendet werden, in einer gemeinsamen starren Wanne angeordnet sind.

Aus der DE 199 25 891 A1 ist ein Verfahren und eine Vorrichtung zum Eichen einer Überfahrwaage für Schienenfahrzeuge bekannt.

Aus der US 4,832,140 A ist eine Plattform für eine wiegende Vorrichtung und ein Verfahren für die Produktion dieser Plattform bekannt. Nachteilig an dieser Vorrichtung ist es, dass die Messelemente direkt in den innenliegenden Formen der Plattformwiegevorrichtung angeordnet sind. Eine genaue Führung der Kraftmessmodule ist dadurch nicht möglich.

In Straßen direkt eingelassene Ausbildungen haben zusätzlich den Nachteil, dass die Ausführung von Servicearbeiten, z.B. nach Eindringen des Oberflächenwassers oder Verschmutzung und dergleichen, insofern schwierig ist, als die Kraftmessmodule einzeln aus
der Messanordnung herausgenommen werden müssen, was mitunter mit Schwierigkeiten verbunden ist. Außerdem müssen im Boden entsprechende Anordnungen zur Ableitung von Regen- oder Schmelzwasser vorgesehen sein, wobei mitgeführte Schwemmbestandteile ebenfalls entfernt werden müssen. Dadurch können bei den bekannten Ausbildungen unzutreffende Messwerte erhalten werden.

Der Erfindung liegt die Aufgabe zu Grunde die Nachteile des Standes der Technik zu überwinden und eine Messanordnung der eingangs genannten Art zu schaffen, mit welcher Messdaten in eichfähiger Genauigkeit erhalten werden können, wobei im Bedarfsfall Reparatur-, Service- bzw. Reinigungsarbeiten sowie gegebenenfalls auch Umbauarbeiten leicht und ohne Schwierigkeiten vorgenommen werden können. Weiters sollen möglichst stabile Kraftmessmodule geschaffen werden, welche auch bei höheren Geschwindigkeiten der darüberfahrenden Fahrzeuge exakte reproduzierbare Werte ergeben.

Erfindungsgemäß wird dies dadurch erreicht, dass die dynamischen Kraftmessmodule in einer starren Wanne eingesetzt sind, wobei gegebenenfalls zwischen den Kraftmessmodulen bzw. auch zwischen den Kraftmessmodulen und der Wand der Wanne Abstandhalter vorgesehen sind, dass die Kraftmessmodule durch über Kraftmesssensoren am Wannenboden abgestützte, die Fahrbahnoberfläche bildende, vorzugsweise rechteckige, Platten gebildet sind, wobei jede Platte der dynamischen Kraftmessmodule über wenigstens zwei entlang einer Längskante der Platte angeordnete Kraftsensoren und wenigstens zwei entlang der gegenüberliegenden Längskante der Platte angeordnete Lager am Wannenboden abgestützt sind, wobei vor bzw. nach den dynamischen Kraftmessmodulen wenigstens ein Kraftmessmodul für eine statisch geeichte Messung des Achsdruckes angeordnet sein, wobei bei dem statischen Kraftmessmodul jede Platte über an jeder Ecke der Platte angeordnete Kraftmesssensoren am Wannenboden abgestützt ist. Dadurch wird eine besonders genaue Führung der dynamischen Kraftmessmodule erzielt, da quer zu den Achsen der Schwenklager auftretende Kräfte durch die Schwenklager zuverlässig aufgenommen werden, womit auf die Druckmesssensoren keinerlei Seitenkräfte, sondern nur vertikal wirkende Druckkräfte aufgebracht werden. Weiters können bei zwischen den Kraftmessmodulen vorgesehenen Abstandhaltern durch bloßes herausnehmen derselben, die Kraftmessmodule und auch das Innere der Wanne frei zugänglich gemacht werden, womit Reinigungsarbeiten bzw. Reparatur- und Servicearbeiten rasch und ohne Probleme vorgenommen werden können.

Weiters ist es möglich an Ort und Stelle Nachwägungen mit geeichten Messanlagen vorzunehmen bzw. die dynamischen Messmodule mit Hilfe der statischen Messmodule genau zu kalibrieren.

Die Abstandhalter können mit dem Wannenboden und/oder den Wänden der Wanne fest verbunden sein, wobei vorzugsweise die in Längsrichtung der Wanne verlaufenden Abstandhalter mit der Wanne einstückig ausgebildet und die in Querrichtung der Wanne verlaufenden Abstandhalter durch passgenau einsetzbare Balken gebildet sind, wodurch erreicht wird, dass die Wanne äußerst stabil wird, womit das

Aufkommen von Schwingungen innerhalb der Wanne, die die Messung der einzelnen Kraftmessmodule untereinander beeinflussen können, ausgeschaltet werden. Besonders einfach ist dabei, dass allein durch das Herausnehmen der in Querrichtung der Wanne verlaufenden Abstandhalter eine Zugangsmöglichkeit zu den Kraftmessmodulen ermöglicht ist.

Um Beeinflussungen durch Reibung zwischen den Wänden der Wanne bzw. den Abstandhaltern und den Seitenflächen der Platten zu verhindern, können an den Seitenflächen der Platten der Kraftmessmodule Gleitelemente zur Abstützung an den Abstandhaltern und/oder den Wannenwänden vorgesehen sein. Um das Auftreten von durch die Fahrzeuge im dynamischen Messbetrieb ausgelösten Eigenschwingungen zu verhindern bzw. zu
minimieren, können im Bereich der Kraftsensoren Vorspannungs- und/oder Dämpfungselemente vorgesehen sein. Weiters können die Seitenwandungen der Platten der Kraftmessmodule zur Fahrbahnoberfläche hin zueinander geneigt verlaufen, wobei die angrenzenden Wandungen der Wanne bzw. der Abstandhalter gegengleich zu den Seitenwandungen der Platten divergieren. Damit wird erreicht, dass ein Kippen der Platten beim Überfahren verhindert ist, da die Kanten der oberen Deckfläche der Platte innerhalb der Grundfläche der Abstützungen über die Kraftmessmodule liegt.

Es können immer zwei Platten paarweise nebeneinander angeordnet sein, wobei in Fahrtrichtung gesehen die Abstände der Plattenpaare untereinander unterschiedlich groß sind. Damit ist einerseits erkennbar, ob die Fahrzeuge gleichmäßig beladen sind und anderseits wird durch die unterschiedlichen Abstände dem Aufbau von durch die Fahrzeuge ausgelöste Störschwingungen vorgebeugt. Es kann aber auch als Kraftmessmodul eine über beide Fahrspuren reichende Platte vorgesehen sein, wobei in Fahrtrichtung gesehen die Abstände der zueinander parallelen Platten zueinander vorzugsweise unterschiedlich groß sind.

Für eine besonders formstabile Wanne können die Abstandhalter mit der Wanne einstückig ausgebildet sein, wobei wenigstens im Bereich eines der seitlichen Enden der Platten der Kraftmessmodule ein Putzschacht vorgesehen ist. Damit ist trotz fixer Abstandhalter die Zugänglichkeit der Kraftmessmodule und deren Wartung möglich.

Bei einem Verfahren zum Messen der statischen und/oder dynamischen Belastung der Fahrbahn durch ein Fahrzeug mit Hilfe der vorstehend dargelegten erfindungsgemäßen Messanordnung werden die zeitlichen Abstände der Maxima der Messungen der hintereinander liegenden Kraftmessmodule erfasst und mit dem Anstieg der Belastungskurve in Relation gesetzt. Damit wird eine besonders hohe Messgenauigkeit erreicht, u.zw. auch bei höheren Fahrgeschwindigkeiten. Die Messgenauigkeit liegt dabei bei einer Überfahrgeschwindigkeit von bis zu 120 km/h bei ±0,25%. Um parasitären Störeinflüssen weitgehend vorzubeugen können die Schwingungen des Fahrzeuges mit den gemessenen Belastungswerten und den gemessenen Frequenzen überlagert werden, womit eine Eigenkorrektur erreicht wird. Schließlich können die Kraftmessmodule der dynamischen Messung durch geeichte Messungen mittels der statischen Messmodule kalibriert werden.

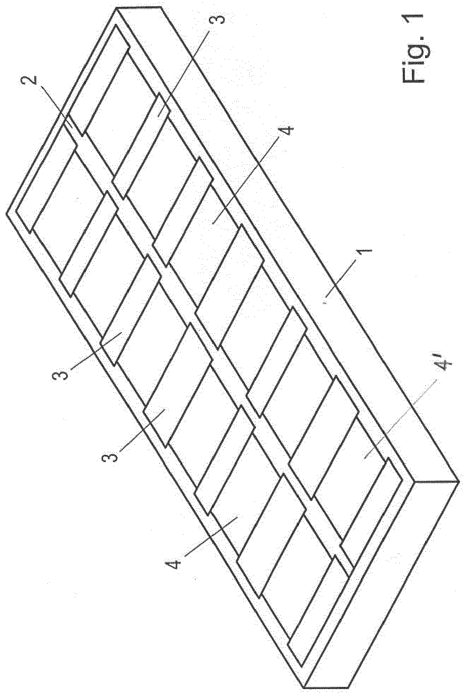

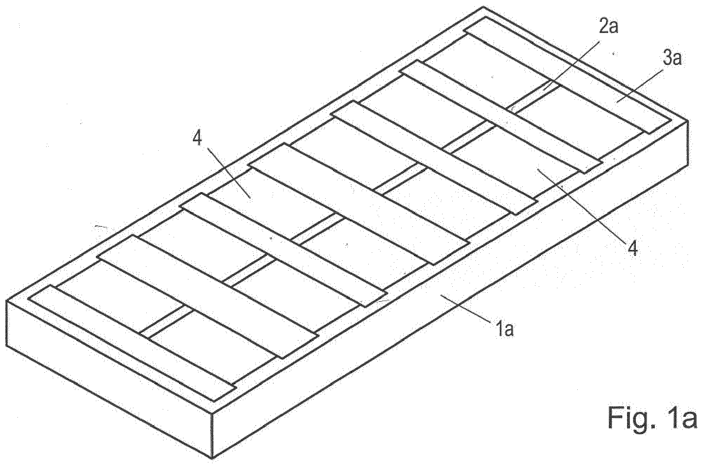

In der Zeichnung ist ein Ausführungsbeispiel des Erfindungsgegenstandes dargestellt. Figur 1 zeigt schaubildlich eine erste Ausführungsform des Anmeldungsgegenstandes von schräg oben.
Figur 1a ist eine der Figur 1 analoge Ansicht einer zweiten Ausführungsform.
Figur 2 gibt eine Draufsicht auf die Wanne der Ausführungsvariante gemäß Figur 1 wieder.
Figur 2a ist eine analoge Draufsicht auf die Ausführungsvariante gemäß Figur 1a.
Figur 3 zeigt im Detail eine Seitenansicht eines Kraftmessmoduls.
Figur 4 gibt schaubildlich eine zweite Ausführungsvariante eines Kraftmoduls wieder.

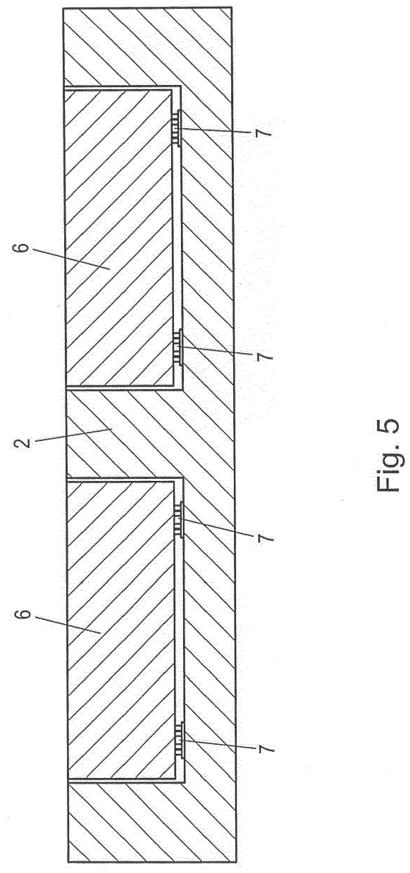

Figur 5 ist ein Schnitt nach Linie V-V der Figur 2 bzw. 2a.

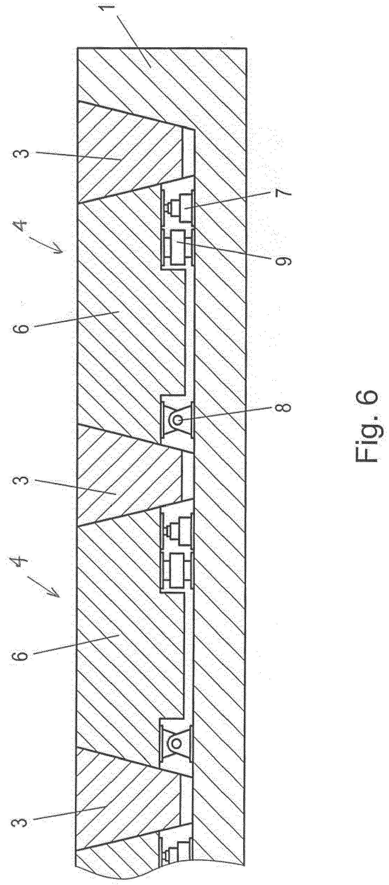

Figur 6 ist ein Schnitt nach Linie VI-VI der Figur 2 bzw. 2a.
Fig. 7 zeigt schematisch den Aufbau der Gesamtanlage mit Auswertungseinheit.
Fig. 8 gibt einen exemplarischen Messkurvenablauf wieder.
Fig. 9 zeigt schaubildlich eine weitere Ausführungsvariante mit über beide Fahrspuren reichenden Kraftmessmodulen.
Fig. 10 gibt in Draufsicht eine Ausbildung mit seitlichen Fahrbahnbegrenzern wieder.
Fig. 11 ist ein Querschnitt nach Linie XI - XI in Fig.10.
Fig. 12 zeigt schaubildlich eine weitere Ausführungsvariante mit seitlichen Fahrbahnbegrenzern in betriebsfertigem Zustand.

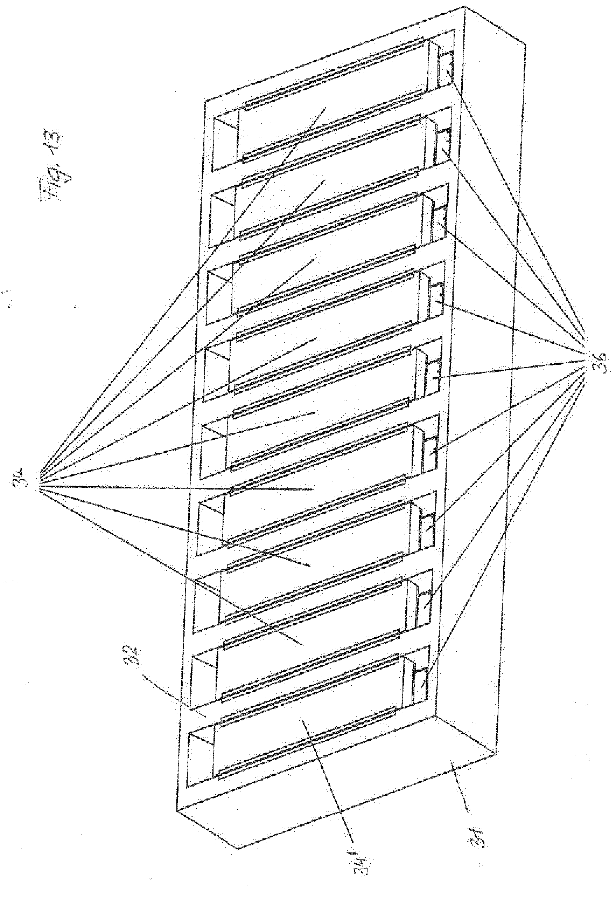

Fig. 13 ist eine Ansicht der Ausbildung gemäß Fig. 12, jedoch bei abgenommenen seitlichen Fahrbahnbegrenzern.

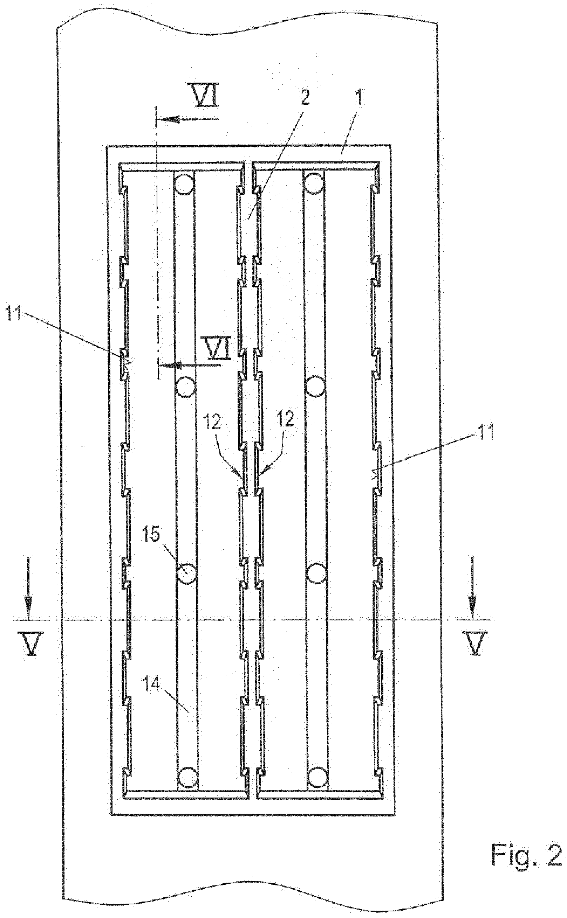

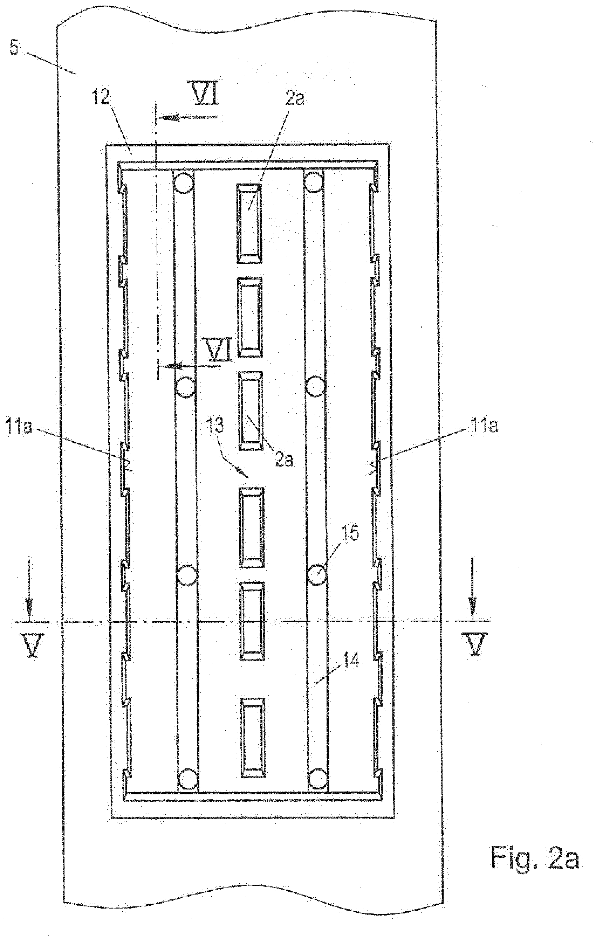

Mit 1 bzw. 1a ist eine starre Wanne bezeichnet, welche in eine Fahrbahn 5 eingesetzt ist, wobei die Oberkante der Wanne in einer Ebene mit der Fahrbahnoberfläche liegt. In diese Wanne 1, 1a sind einzelne Kraftmessmodule 4 voneinander beanstandet eingesetzt, wobei zwischen diesen Kraftmessmodulen Abstandhalter 2, 2a, 3, 3a eingesetzt sind. Die Unterschiede zwischen der Ausbildung gemäß Figur 1 und Figur 1a liegt darin, dass bei der Figur 1 der in Längsrichtung verlaufende Abstandhalter 2 durchgehend ist, wobei die quer zur Längsrichtung der Wanne verlaufenden Abstandhalter 3 zwischen der Wannenlängswandung und dem Abstandhalter 2 eingesetzt sind. Bei der Ausführungsvariante gemäß Figur 1 hingegen sind in Längsrichtung hintereinander Abstandhalter 2, 2a in der Längsmitte der Wanne angeordnet, wobei die quer zur Wannenlängsrichtung verlaufenden Abstandhalter 3a von einer Wannenlängswandung zur anderen Längswandung durchgehen und in Unterbrechungen 13 zwischen den einzelnen Teilstücken der in Längsrichtung verlaufenden Abstandhalter 2a eingesetzt sind. Zur Festlegung der Abstandhalter 3 sind gemäß Figur 2 an der Längsinnenwandung der Wanne 1, Ausnehmungen 11 und diesen Ausnehmungen gegenüberliegend entsprechende Ausnehmungen 12 in dem in Längsrichtung der Wanne 1 verlaufenden Abstandhalter 2 angeordnet. Beim Ausführungsbeispiel gemäß Figur 1a und 2a sind an der Längsinnenwandung der Wanne 1a wieder Ausnehmungen 11a vorgesehen, welche mit entsprechenden Unterbrechungen 13 zwischen den Abstandhaltern 2a fluchten.

Die Ausnehmungen 11, 11a, 12 sowie die Unterbrechung 13 sind in Vorderansicht trapezförmig, wobei die von der Wannenoberkante ausgehenden Seitenwandungen der Ausnehmungen zum Boden der Wanne 1, 1a hin konvergieren.

Die Querschnittsform der quer zur Wannenlängsrichtung verlaufenden Abstandhalter 3 und 3a entsprechen den Querschnitten der Ausnehmung 11, 11a, 12 bzw. der Unterbrechung 13, wodurch die Abstandhalter passgenau in der Wanne 1, 1a festlegbar sind. Die Längsinnenwandungen der Wanne 1, 1a verlaufen vom Boden der Wanne 1, 1a ausgehend im rechten Winkel nach oben, wobei die Ausnehmungen 11, 11a entsprechend ausgebildet sind damit die Abstandhalter in diesen Ausnehmungen trotz der hohen Belastungen durch die darüber hinweg fahrenden Fahrzeuge den Belastungen standhalten.

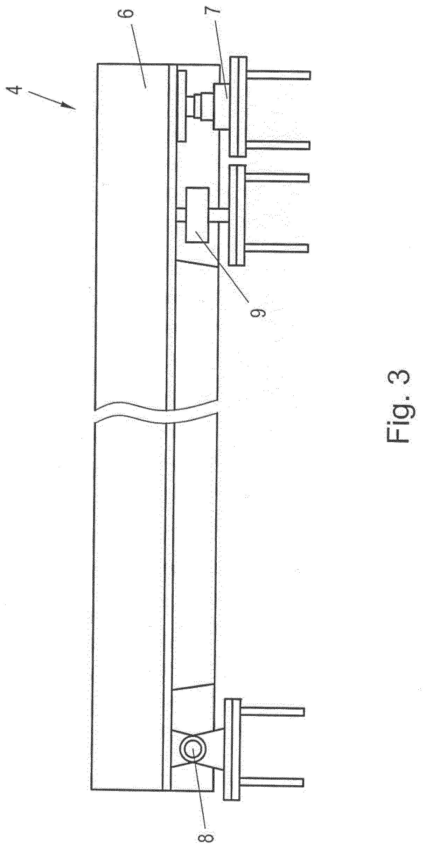

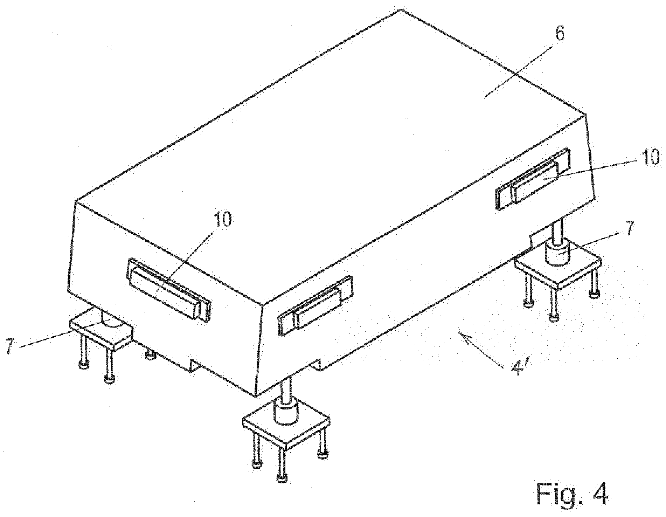

Zwischen den in Querrichtung verlaufenden Abstandhaltern 3, 3a sind Kraftmessmodule 4 eingesetzt, deren Querschnitt dem Freiraum zwischen den Abstandhaltern bzw. zwischen den Wandungen der Wanne 1, 1a und dem in Längsrichtung verlaufenden Abstandhalter 2 bzw. 2a entsprechen. Diese Kraftmessmodule bestehen aus einer starren Platte 6, die im Bereich ihrer vier Ecken am Boden der Wanne 1, 1a entweder an jeder Ecke durch Kraftmesssensoren 7 abgestützt sind (siehe Figur 4) oder aber entlang einer ihrer Längskanten über zwei Kraftmesssensoren 7 und entlang der gegenüberliegenden Längskante über Schwenklager 8 festgelegt sind (Figur 3). Die letztgenannte Ausführungsvariante ergibt eine höhere Stabilität der Lagerung der Platten 6, da Querschubbewegungen durch darüber fahrende Fahrzeuge von den Schwenklagern aufgenommen werden können. Diese Variante wird für die Erfassung der dynamischen Achsdrücke eingesetzt. Zur Erfassung der statischen Achsdrücke wird hingegen die vorher beschriebene Variante verwendet, nämlich jene, bei welcher die starre Platte 6 im Bereich ihrer vier Ecken am Boden der Wanne 1 über die Kraftmesssensoren 7 abgestützt ist. Diese Kraftmessmodule zur Erfassung der statischen Achsdrücke sind am Anfang und/oder am Ende der Messstrecke angeordnet und mit 4' bezeichnet.

Zusätzlich kann man im Bereich der Kraftmesssensoren 7 auch noch Dämpfungselemente 9 vorsehen, welche ein Aufkommen von Störschwingungen verhindern.

Wie in Figur 4 dargestellt ist, können im Bereich der Außenwandungen der Platten 6 Gleitelemente 10 angebracht sein, mittels welcher verhindert werden soll, dass durch Anhaften der Platten 6 an der Wannenwandung bzw. der Wandung der Abstandhalter eine Verfälschung der Messergebnisse erfolgt.

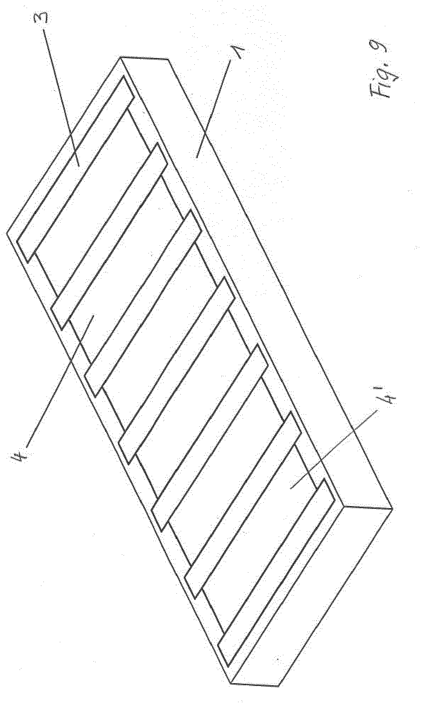

Wie aus den Figuren 1 und 1a ersichtlich ist, sind die Kraftmessmodule paarweise in Längsrichtung nebeneinander angeordnet, wobei in Längsrichtung der Wanne gesehen die Abstände zwischen den Kraftmessmodulen unterschiedlich sind, um zu verhindern, dass durch die Messanordnung zusätzliche Schwingungen in das Fahrzeug eingebracht werden, die beim Überfahren der Messstrecke das Messergebnis beeinflussen können. Diese unterschiedlichen Abstände werden in einfacher Weise durch Verwendung von Abstandhaltern entsprechender Breite erzielt. Es können an Stelle der paarweise nebeneinander liegenden Kraftmessmodule auch einstückig durchgehende Kraftmessmodule vorgesehen sein, wobei dann der in Längsmitte verlaufende Abstandhalter 2 bzw. 2a entfallen kann, wie dies in Fig.9 wiedergegeben ist.

Wie aus den Figuren 2 und 2a ersichtlich ist, weist der Boden der Wanne 1, 1a Wassersammeirinnen 14 auf, die zu Abflussöffnungen 15 führen. Damit wird verhindert, dass Oberflächenwasser in der Wanne zurückbleibt.

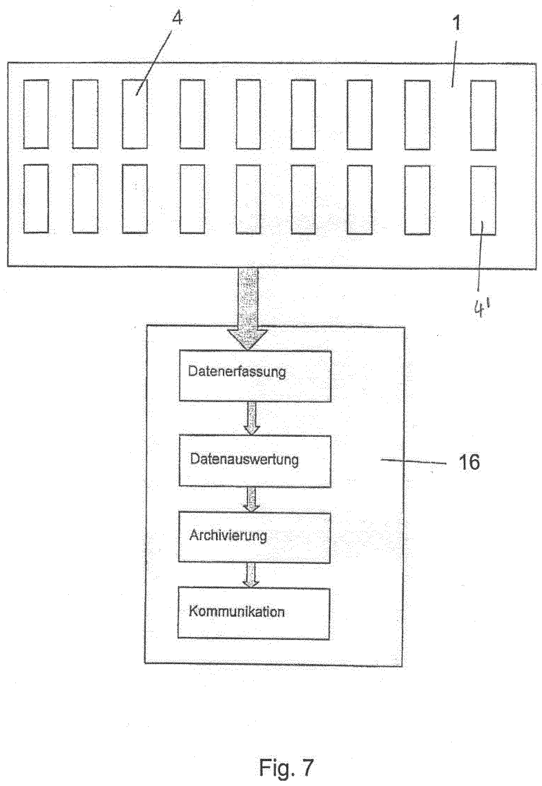

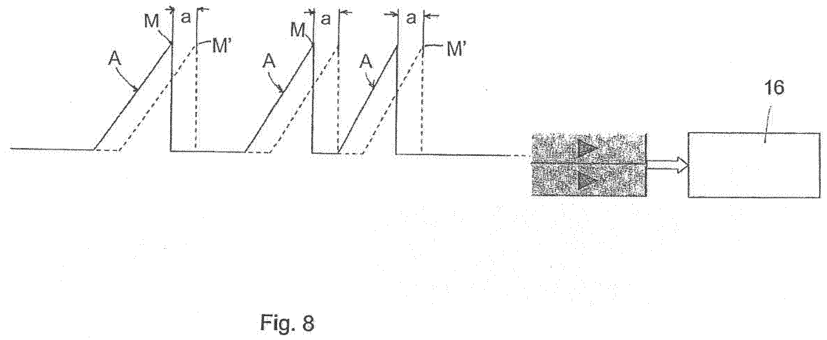

Die Kraftmesssensoren sind an einen Rechner 16 (Fig. 7, 8) angeschlossen, welcher die zeitlichen Abstände a der Maxima M, M' der Messungen der hintereinander liegenden Kraftmessmodule erfasst und mit dem Anstieg A der Belastungskurve in Relation setzt. Es kann dadurch herausgefiltert werden, welche Belastung durch die Eigenschwingung des Fahrzeuges hervorgerufen wurde und welche die tatsächliche Achsbelastung des Fahrzeuges ist. Dazu wird die vom Fahrzeug ausgelöste Eigenschwingungskurve mit dem gemessenen Belastungswerten überlagert.

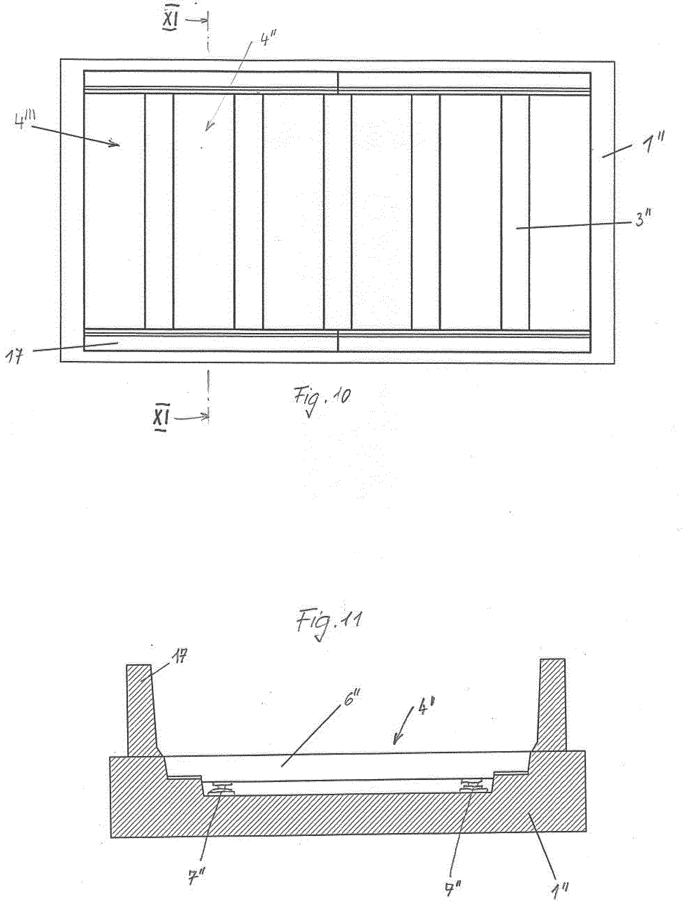

Dazu werden die von den Kraftmessmodulen 4 gelieferten Daten zur Datenaufbereitung im Rechner 16 in einer Datenerfassung eichfähig aufbereitet, wobei auch mit externen Telematik-Modulen kommuniziert wird, um erforderliche zusätzliche Daten berücksichtigen zu können. Die erfassten Messwerte werden in der Datenauswertung mit anderen Daten, z.B. einer Fahrzeugerkennungssoftware verknüpft und analysiert. Diese Analyse kann auch on-line erfolgen, wobei unter anderem die Laufgütequalität beurteilt wird, wodurch z.B. starke Schäden am Rad erkannt werden können. Weiters wird durch die Verknüpfung der Messdaten das Fahrzeuggewicht in eichfähiger Genauigkeit ermittelt. Schließlich ermöglicht die erfindungsgemäße Ausbildung die Auswertung der dynamischen Radkräfte und Achslasten. Die ermittelten und ausgewerteten Messdaten werden dann archiviert und einem Kommunikationsmodul zur Verfügung gestellt. Bei der Ausführungsvariante gemäß den Fig 10 und 11 sind in der Wanne 1" Kraftmessmodule 4" vorgesehen, die durch Abstandhalter 3" in ihrer Lage gesichert sind. Die Kraftmessmodule 4" bestehen je aus einer über beide Fahrspuren reichenden Platte 6", die über Kraftmesssensoren 7" am Wannenboden abgestützt sind. Die Fahrspuren werden an den Außenseiten der Messanordnung durch in Längsrichtung verlaufende Begrenzungsbalken 17 begrenzt.

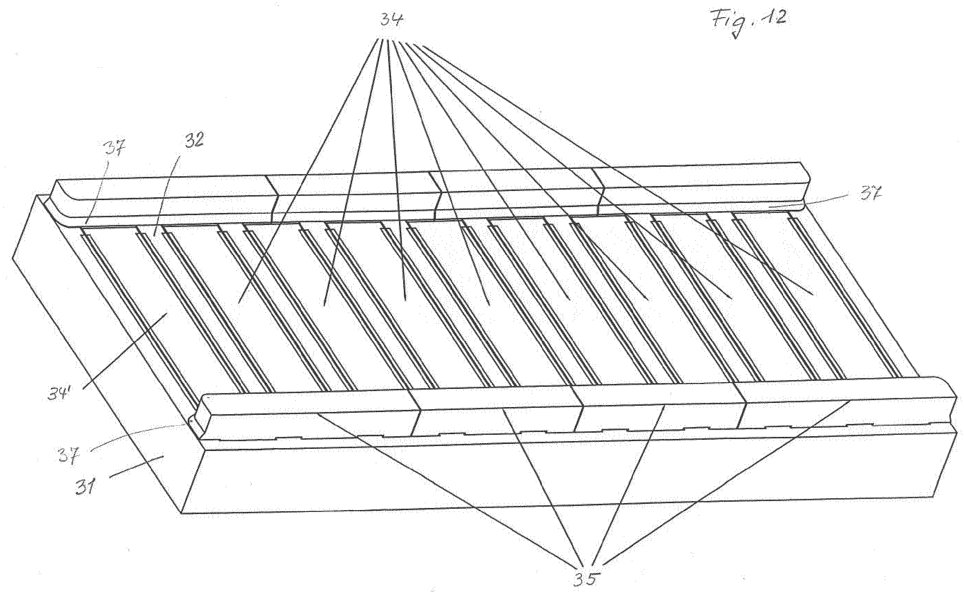

Bei dieser Ausführungsvariante sind an der Wanne 31 mit dieser einstückige Abstandhalter 32 vorgesehen, zwischen welche die Kraftmessmodule 34 bzw. 34 eingesetzt sind. Bei den Kraftmessmodulen 34 handelt es sich um jene zur Aufnahme der dynamischen Kräfte und bei dem Kraftmessmodul 34' handelt es sich um jenes zur Erfassung der statischen Achsdrücke. Die Kraftmessmodule 34, 34' sind in ihrer Längserstreckung, also quer zur Längsrichtung der Wanne 31, kürzer als die entsprechenden Ausnehmungen zwischen den Abstandhaltern 32, wodurch seitlich Putzöffnungen 36 frei bleiben, welche im Normalbetrieb durch seitliche Fahrbahnbegrenzer 35 abgedeckt sind. Diese Putzöffnungen dienen dazu, dass im Bedarfsfall die Kraftmesssensoren 7 der einzelnen Kraftmessmodule von der Seite her zugänglich sind, um allfällige Wartungsarbeiten oder dergleichen vornehmen zu können. Diese Putzöffnungen 36 sind im Normalbetrieb durch die seitlichen Fahrbahnbegrenzer 35 so abgedeckt, dass grobe Verunreinigungen, wie Streusplitt oder dergleichen, in diese Putzöffnungen nicht hineinfallen können. Auch das Eindringen von direktem Regenwasser ist damit verhindert. Falls von der Fahrbahn abrinnendes Oberflächenwasser vorhanden ist, so kann dies teilweise über Dichtlippen 37 (Fig. 12) am Eindringen in Putzschächte weitgehend gehindert werden.

Die Auswertung der Messwerte erfolgt in gleicher Weise wie es vorstehen zu den anderen Ausführungsvarianten beschrieben ist.

Bei den erfindungsgemäßen Messanordnungen können die Kraftmessmodule der dynamischen Messung durch geeichte Messungen mittels der statischen Messmodule geeicht, kalibriert und justiert werden.

Die in den angeführten Ausführungsbeispielen beschriebenen Messanordnungen sind in den Zeichnungen mit Ausnahme der Kraftmessmodule 4 und der Lager 8 als Betonbauteile dargestellt. Anstelle dieser Betonbauteile können jedoch in nicht dargestellter Weise auch Metall- oder Kunststoffbauteile verwendet werden.

## Patentansprüche

1. Anordnung zum Messen der Achsdrucke von Transportfahrzeugen, wie Lastkraftwagen u.dgl., bei welcher in einer Ausnehmung des Fahrweges Kraftmessmodule zur dynamischen Achsdruckmessung vorgesehen sind und zur Erfassung von dynamischen Belastungen einer Fahrbahn durch Straßenfahrzeuge in der Fahrbahn eine Serie von dynamischen Kraftmessmodulen voneinander beabstandet eingelassen sind, **dadurch gekennzeichnet, dass** die dynamischen Kraftmessmodule (4) in einer starren Wanne (1, 10) eingesetzt sind, wobei gegebenenfalls zwischen den Kraftmessmodulen (4, 4') bzw. auch zwischen den Kraftmessmodulen (4, 4') und der Wand der Wanne (1) Abstandhalter (2, 2a, 3, 3a) vorgesehen sind, dass die Kraftmessmodule (4, 4') durch über Kraftmesssensoren (7) am Wannenboden abgestützte, die Fahrbahnoberfläche bildende, vorzugsweise rechteckige, Platten (6) gebildet sind, wobei jede Platte (6) der dynamischen Kraftmessmodule (4) über wenigstens zwei entlang einer Längskante der Platte (6) angeordnete Kraftsensoren (7) und wenigstens zwei entlang der gegenüber liegenden Längskante der Platte (6) angeordnete Lager (8) am Wannenboden abgestützt ist, und wobei vor bzw. nach den dynamischen Kraftmessmodulen (4, 4", 34) wenigstens ein Kraftmessmodul (4') für eine statische geeichte Messung des Achsdruckes in der starren Wanne (1) angeordnet ist, wobei bei dem statischen Kraftmessmodul (4') jede Platte (6) über an jeder Ecke der Platte (6) angeordnete Kraftmesssensoren (7) am Wannenboden abgestützt ist.

2. Messanordnung nach Anspruch 1, **dadurch gekennzeichnet, dass** die Abstandhalter (2, 2a, 3, 3a) mit dem Wannenboden und/ oder den Wänden der Wanne (1, 1a) fest verbunden sind, wobei vorzugsweise die in Längsrichtung der Wanne (1, 1a) verlaufenden Abstandhalter (2, 2a) mit der Wanne (1, 1a) einstückig ausgebildet und die in Querrichtung der Wanne (1, 1a) verlaufenden Abstandhalter (3, 3a) durch passgenau einsetzbare Balken gebildet sind.

3. Messanordnung nach einem der Ansprüche 1 bis 2, **dadurch gekennzeichnet, dass** an den Seitenflächen den Platten (6) der Kraftmessmodule (4) Gleitelemente (10) zur Abstützung an den Abstandhaltern und/ oder den Wannenwänden vorgesehen sind.

4. Messanordnung nach einem der Ansprüche 1 bis 3, **dadurch gekennzeichnet, dass** im Bereich der Kraftmesssensoren (7) Vorspannungs- und Dämpfungselemente (9) angeordnet sind.

5. Messanordnung nach einem der Ansprüche 1 bis 4, **dadurch gekennzeichnet, dass** die Seitenwandungen der Platten (6) der Kraftmessmodule (4, 4', 34) zur Fahrbahnoberfläche hin zueinander geneigt verlaufen, wobei die angrenzenden Wandungen der Wanne (1, 1a) bzw. der Abstandhalter (2, 2a, 3, 3a) gegengleich zu den Seitenwandungen der Platten (6) divergieren.

6. Messanordnung nach einem der Ansprüche 1 bis 5, **dadurch gekennzeichnet, dass** immer zwei Platten (6) paarweise nebeneinander angeordnet sind, wobei in Fahrtrichtung gesehen die Abstände der Plattenpaare zueinander unterschiedlich groß sind.

7. Messanordnung nach einem der Ansprüche 1 bis 6, **dadurch gekennzeichnet, dass** als Kraftmessmodul eine über beide Fahrspuren reichende Platte vorgesehen ist, wobei in Fahrtrichtung gesehen die Abstände der zueinander parallelen Platten zueinander vorzugsweise unterschiedlich groß sind.

8. Messanordnung nach einem der Ansprüche 1 bis 7, **dadurch gekennzeichnet, dass** die Abstandhalter mit der Wanne einstückig ausgebildet sind, wobei wenigstens im Bereich eines der seitlichen Enden der Platten der Kraftmessmodule (34, 34') ein Putzschacht (36) vorgesehen ist.

## Claims

1. Arrangement for measuring the axle pressures of transport vehicles, such as commercial trucks, in which load cell modules for dynamically measuring axle pressures are provided in a recess of the roadway, and for detecting dynamic loadings of a carriageway by road vehicles, a series of dynamic load cell modules are embedded in the carriageway, spaced apart from one another,
**characterized in that**
the dynamic load cell modules (4) are inserted in a rigid trough (1, 10), wherein spacers (2, 2a, 3, 3a) are provided where appropriate between the load cell modules (4, 4') or else between the load cell modules (4, 4') and the wall of the trough (1), that the load cell modules (4, 4') are formed by preferably rectangular plates (6) that form the carriageway surface and are supported on the bottom of the trough via load cell sensors (7), each plate (6) of the dynamic load cell modules (4) being supported on the bottom of the trough using at least two force sensors (7) arranged along a longitudinal edge of the plate (6) and at least two bearings (8) arranged along the opposite longitudinal edge of the plate (6), and at least one load cell module (4') for a static calibrated measurement of the axle pressure being arranged in the rigid trough (1) upstream or downstream of the dynamic load cell modules (4, 4", 34), and in the case of the static load cell module (4') each plate (6) being supported on the bottom of the trough via load cell sensors (7) arranged at each corner of the plate (6).

2. Measuring arrangement according to Claim 1,
**characterized in that**
the spacers (2, 2a, 3, 3a) are fixedly connected to the bottom of the trough and/or to the walls of the trough (1, 1a), the spacers (2, 2a) that extend in the longitudinal direction of the trough (1, 1a) preferably being designed integrally with the trough (1, 1a) and the spacers (3, 3a) extending perpendicular to the trough (1, 1a) being formed by beams which can be inserted with an exact fit.

3. Measuring arrangement according to any of Claims 1 to 2,
**characterized in that**
on the side faces of the plates (6) of the load cell modules (4), sliding elements (10) are provided for the purpose of support on the spacers and/or the walls of the trough.

4. Measuring arrangement according to any of Claims 1 to 3,
**characterized in that**
in the region of the load cell sensors (7), spring-loading and damping elements (9) are arranged.

5. Measuring arrangement according to any of Claims 1 to 4,
**characterized in that**
the side walls of the plates (6) of the load cell modules (4, 4', 34) extend towards the carriageway surface and are inclined with respect to each other, wherein the adjoining walls of the trough (1, 1a), or the spacers (2, 2a, 3, 3a), diverge in a mirror-inverted manner with respect to the side walls of the plates (6).

6. Measuring arrangement according to any of Claims 1 to 5,
**characterized in that**
two plates (6) are always arranged next to each other in pairs, wherein viewed in the direction of travel the distances between the pairs of plates have different sizes.

7. Measuring arrangement according to any of Claims 1 to 6,
**characterized in that**
a plate extending over both driving lanes is provided as a load cell module, wherein viewed in the direction of travel the distances between the parallel plates preferably have different sizes.

8. Measuring arrangement according to any of Claims 1 to 7,
**characterized in that**
the spacers are designed integrally with the trough, wherein a cleaning opening is provided in the region of at least one of the lateral ends of the plates of the load cell modules (34, 34').

## Revendications

1. Système pour mesurer des charges sur essieu de véhicules de transport, comme les camions et véhicules analogues, pour lequel des modules dynamométriques sont prévus dans une cavité de la voie de circulation pour la mesure dynamique de charge sur essieu et une série de modules dynamiques de mesure dynamométrique à distance les uns des autres est incorporée dans la chaussée pour la saisie des charges dynamiques d'une chaussée exercées par des véhicules routiers, **caractérisé en ce que** les modules dynamiques de mesure dynamométrique (4) sont intégrés dans une coque rigide (1,10), des supports d'écartement (2,2a,3,3a) étant prévus le cas échéant entre les modules de mesure dynamométrique (4,4') ou également entre les modules de mesure dynamométrique (4,4') et la paroi de la coque (1), **en ce que** les modules de mesure dynamométrique (4,4') sont formés de plaques (6) de préférence rectangulaires formant la surface de la chaussée, appuyées sur des capteurs de mesure dynamométrique (7) au fond de la coque, chaque plaque (6) des modules dynamiques de mesure dynamométrique (4) étant appuyée au fond de la coque sur au moins deux capteurs dynamométriques (7) disposés le long d'un bord longitudinal de la plaque (6) et au moins deux supports (8) disposés le long du bord longitudinal opposé de la plaque (6) et au moins un module de mesure dynamométrique (4') étant disposé avant ou après les modules dynamiques de mesure dynamométrique (4,4",34) dans la coque fixe (1) pour une mesure statique étalonnée de la charge sur essieu, pour le module statique de mesure dynamométrique (4'), chaque plaque (6) étant appuyée au fond de la coque sur des capteurs de mesure dynamométrique (7) disposés à chaque coin de la plaque (6).

2. Système de mesure selon la revendication 1, **caractérisé en ce que** les supports d'écartement (2,2a,3,3a) sont fermement reliés au fond de la coque et/ou aux parois de la coque (1,1a), les supports d'écartement (2,2a) passant dans le sens longitudinal de la coque (1,1a) étant de préférence constitués en une seule pièce avec la coque (1,1a) et les supports d'écartement (3,3a) passant dans le sens transversal de la coque (1,1a) étant formés par des barres pouvant être insérées de manière précise.

3. Système de mesure selon l'une quelconque des revendications 1 à 2, **caractérisé en ce que** des éléments coulissants (10) pour appui sur les supports d'écartement et/ou les parois de la coque sont prévus sur les faces latérales des plaques (6) du module de mesure dynamométrique (4).

4. Système de mesure selon l'une quelconque des revendications 1 à 3, **caractérisé en ce que** des éléments de précontrainte et d'amortissement (9) sont disposés dans la zone des capteurs de mesure dynamométrique (7).

5. Système de mesure selon l'une quelconque des revendications 1 à 4, **caractérisé en ce que** les parois latérales des plaques (6) des modules de mesure dynamométrique (4,4',34) passent inclinées l'une par rapport à l'autre par rapport à la surface de la chaussée, les parois limitrophes de la coque (1,1a) ou des supports d'écartement (2,2a,3,3a) divergeant diamétralement opposés aux parois latérales des plaques (6).

6. Système de mesure selon l'une quelconque des revendications 1 à 5, **caractérisé en ce que** deux plaques (6) sont toujours disposées par paire l'une près de l'autre, les distances des paires de plaques vues dans le sens de la marche étant de taille différente l'une par rapport à l'autre.

7. Système de mesure selon l'une quelconque des revendications 1 à 6, **caractérisé en ce qu'**une plaque passant sur les deux voies de circulation est prévue en tant que module de mesure dynamométrique, les distances des plaques parallèles l'une par rapport à l'autre vues dans le sens de la marche étant de taille différente l'une par rapport à l'autre.

8. Système de mesure selon l'une quelconque des revendications 1 à 7, **caractérisé en ce que** les supports d'écartement sont constitués en une seule pièce avec la coque, un regard de nettoyage (36) étant prévu au moins dans la zone d'une des extrémités latérales des plaques des modules de mesure dynamométrique (34,34').
